# EUROPEAN PATENT APPLICATION

(11) **EP 4 393 735 A1**
(43) Date of publication of application: **03.07.2024**
(21) Application number: 22876225.8
(22) Date of filing: 27.09.2022
(51) Int. Cl.: B60K 1/00, B60K 17/12, B60K 17/16

(54) **DRIVE DEVICE FOR VEHICLE**

(30) Priority: 28.09.2021 JP 2021158216
(71) Applicant: AISIN CORPORATION, Kariya-shi, Aichi 448-8650 (JP)
(72) Inventor: TAKAHASHI Nozomu, Kariya-shi, Aichi 448-8650 (JP); HANAI Takayoshi, Kariya-shi, Aichi 448-8650 (JP); YAMASHITA Teppei, Kariya-shi, Aichi 448-8650 (JP); SANJI Hiroaki, Kariya-shi, Aichi 448-8650 (JP)
(74) Representative: Kramer Barske Schmidtchen Patentanwälte PartG mbB
(86) International application number: PCT/JP2022/035939
(87) International publication number: WO 2023/054359

(57) **Abstract**

An inverter (10) that controls a rotary electric machine (1) is above the rotary electric machine (1) and overlaps the rotary electric machine (1) when viewed in a vertical direction (V). A differential gear assembly (4) includes a differential input gear (41) being an input element in the differential gear assembly (4). The differential input gear (41) is at least partially located in an oil reservoir (9a) in a case (9) and is located on a second axis (X2) different from a first axis (X1) being a rotation axis of a rotor (12) in the rotary electric machine (1). The first axis (X1) is below the second axis (X2). The rotor (12) has a lower end located above a lower end of the differential input gear (41).

## Description

### FIELD

The present invention relates to a vehicle drive device including a rotary electric machine to be a drive power source for wheels, an input member drivably connected to a rotor in the rotary electric machine, a pair of output members drivably connected to the respective wheels, a differential gear assembly that distributes rotation transmitted from the input member to the pair of output members, and an inverter that controls the rotary electric machine.

### BACKGROUND

An example vehicle drive device is described in Patent Literature 1 below. Reference signs in parentheses used below in describing the background and the technical problem are the reference signs in Patent Literature 1.

A vehicle drive device (100) described in Patent Literature 1 includes a differential gear assembly (5) including a differential input gear (51) as an input element for the differential gear assembly. The differential input gear (51) has a relatively large outer diameter. The vehicle drive device (100) described above thus includes an inverter (7) located above a rotation axis (A3) of the differential gear assembly (5) and overlapping the differential input gear (51) when viewed in an axial direction (L). This allows the vehicle drive device (100) to be smaller in a vertical direction (V).

### CITATION LIST

### PATENT LITERATURE

Patent Literature 1: WO 2020/202963

### BRIEF SUMMARY

### TECHNICAL PROBLEM

The vehicle drive device (100) described in Patent Literature 1 is smaller in the vertical direction (V) and avoids interference between the inverter (7) and the rotary electric machine (1) with the inverter (7) shifted in a width direction (D), or in a direction perpendicular to the axial direction (L) when viewed vertically, from the rotation axis (A1) of the rotary electric machine (1). Thus, the vehicle drive device (100) cannot be smaller in the width direction (D).

A vehicle drive device including a rotary electric machine, a differential gear assembly, and an inverter is to be smaller in the width direction as well as in the vertical direction.

### SOLUTION TO PROBLEM

In response to the above, a vehicle drive device includes a rotary electric machine to be a drive power source for wheels and including a stator and a rotor, an input member drivably connected to the rotor, a pair of output members drivably connected to the respective wheels, a differential gear assembly that distributes rotation transmitted from the input member to the pair of output members, an inverter that controls the rotary electric machine, and a case accommodating the rotary electric machine, the input member, the differential gear assembly, and the inverter. The case includes an oil reservoir that stores oil. The inverter is above the rotary electric machine and overlaps the rotary electric machine when viewed in a vertical direction. The differential gear assembly includes a differential input gear being an input element in the differential gear assembly. The differential input gear is at least partially located in the oil reservoir and is located on a second axis different from a first axis being a rotation axis of the rotor. The first axis is below the second axis. The rotor has a lower end located above a lower end of the differential input gear.

In this structure with the above aspect, the first axis as the rotation axis of the rotor is located below the second axis as the rotation axis of the differential gear assembly. Thus, the vehicle drive device including the inverter located above the rotary electric machine and overlapping the rotary electric machine when viewed in the vertical direction may be easily smaller in the vertical direction. This arrangement also allows the area of the inverter to be located within an area relatively near the first axis in a width direction that is a direction perpendicular to the first axis when viewed in the vertical direction. Thus, the structure including the rotary electric machine, the differential gear assembly, and the inverter may be smaller in the width direction as well as in the vertical direction.

In this structure with the above aspect, the differential input gear is at least partially located in the oil reservoir to store oil. The rotor has its lower end located above the lower end of the differential input gear. This reduces fluid resistance between the rotor and the oil and allows the differential input gear to splash the oil and supply the oil to supply targets including the rotary electric machine.

### BRIEF DESCRIPTION OF DRAWINGS

FIG. 1 is a cross-sectional view of a vehicle drive device according to an embodiment taken in an axial direction.
FIG. 2 is a skeleton diagram of the vehicle drive device according to the embodiment.
FIG. 3 is a diagram of the vehicle drive device according to the embodiment, describing the positional relationship between its elements when viewed axially.
FIG. 4 is a diagram of the vehicle drive device according to the embodiment, describing the positional relationship between its elements when viewed vertically.
FIG. 5 is a diagram of a rotary electric machine and a terminal block, describing their positional relationship when viewed axially.

### DETAILED DESCRIPTION

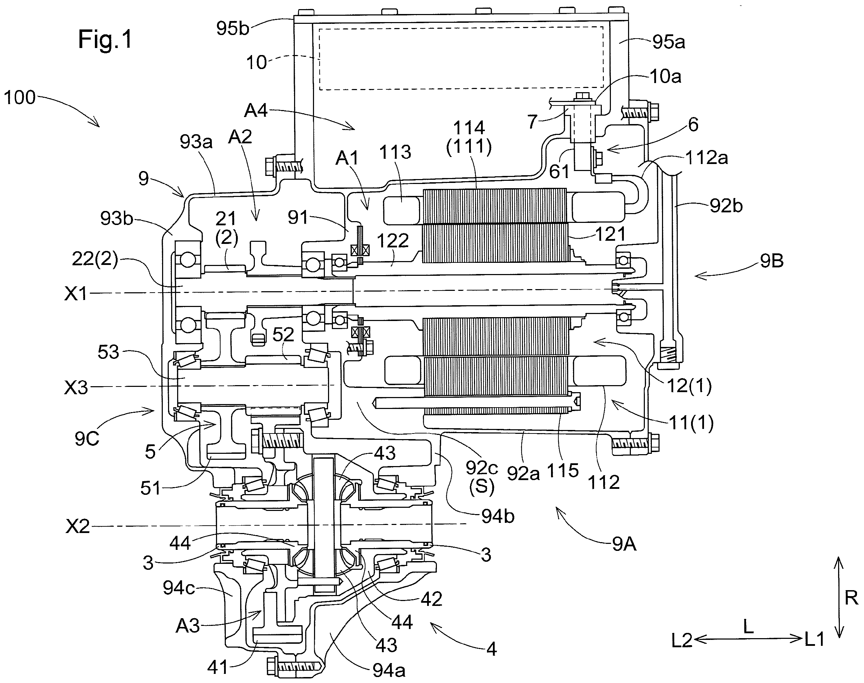

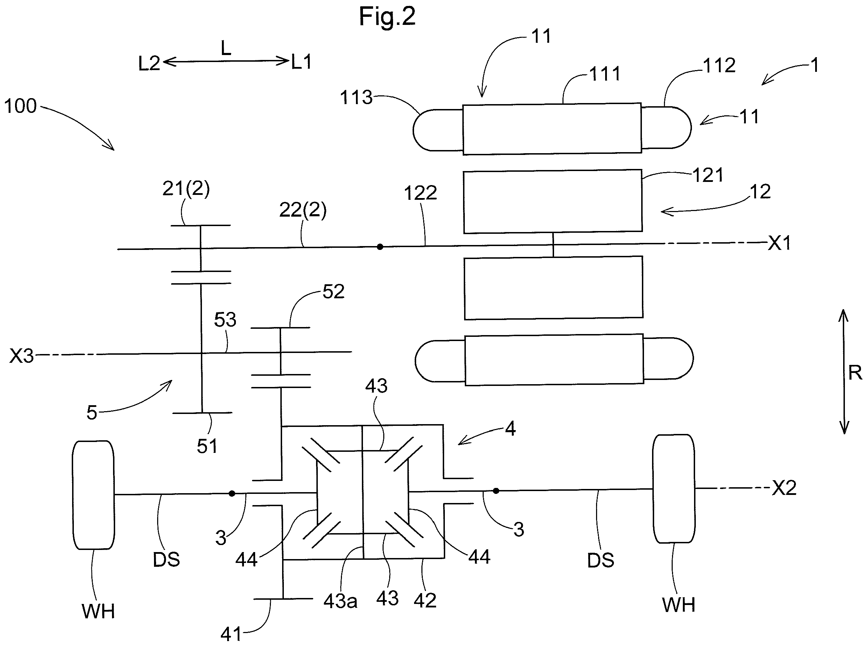

A vehicle drive device 100 according to an embodiment will now be described with reference to the drawings. As shown in FIGs. 1 and 2, the vehicle drive device 100 includes a rotary electric machine 1 including a stator 11 and a rotor 12, an input member 2, a pair of output members 3, a differential gear assembly 4, and an inverter 10. In the present embodiment, the vehicle drive device 100 further includes a counter gear assembly 5 and a case 9.

The rotary electric machine 1 is located on a first axis X1. The first axis X1 is a rotation axis of the rotor 12. The input member 2 is also located on the first axis X1 in the present embodiment. The differential gear assembly 4 is located on a second axis X2 different from the first axis X1. The pair of output members 3 is also located on the second axis X2 in the present embodiment. The counter gear assembly 5 is located on a third axis X3 different from the first axis X1 and the second axis X2 in the present embodiment. In this example, the axes X1 to X3 are parallel to one another.

The direction parallel to the axes X1 to X3 is hereafter referred to as an axial direction L for the vehicle drive device 100. One direction in the axial direction L is referred to as a first axial direction L1, and the opposite direction is referred to as a second axial direction L2. In the present embodiment, the rotary electric machine 1 is located in the first axial direction L1 from the input member 2 in the axial direction L. The direction opposite to the first axial direction L1 is referred to as the second axial direction L2. The directions perpendicular to the axes X1 to X3 are referred to as radial directions R of the axes. A radial direction R of any of the axes or a radial direction R of an apparent reference axis may be simply referred to as a radial direction R.

As shown in FIG. 1, the case 9 accommodates the rotary electric machine 1, the input member 2, the differential gear assembly 4, and the inverter 10. The case 9 also accommodates the pair of output members 3 and the counter gear assembly 5 in the present embodiment. The pair of output members 3 are accommodated in the case 9 with parts of the output members 3 exposed outside the case 9.

The case 9 includes a first compartment A1, a second compartment A2, a third compartment A3, and a fourth compartment A4. In the present embodiment, the first compartment A1 is a space accommodating the rotary electric machine 1. The second compartment A2 is a space accommodating the input member 2 and the counter gear assembly 5. The third compartment A3 is a space accommodating the pair of output members 3 and the differential gear assembly 4. The fourth compartment A4 is a space accommodating the inverter 10.

In the present embodiment, the case 9 includes a partition wall 91, a first peripheral wall 92a, a first side wall 92b, a second peripheral wall 93a, a second side wall 93b, a third peripheral wall 94a, a third side wall 94b, a fourth side wall 94c, a compartment wall 95a, and a lid 95b.

The partition wall 91 separates the first compartment A1 and the second compartment A2. In the present embodiment, the partition wall 91 extends in the radial direction R. In other words, the partition wall 91 separates the first compartment A1 and the second compartment A2 in the axial direction L.

The first peripheral wall 92a covers the rotary electric machine 1 from outside in the radial direction R. The first side wall 92b covers an end of the rotary electric machine 1 in the first axial direction L1. In the present embodiment, the first peripheral wall 92a is cylindrical and defines an opening in the first axial direction L1. The opening defined by the first peripheral wall 92a in the first axial direction L1 is covered with the first side wall 92b. The first peripheral wall 92a is integral with the partition wall 91 in its portion located in the second axial direction L2 from the rotary electric machine 1. In this example, the partition wall 91, the first peripheral wall 92a, the third peripheral wall 94a, the third side wall 94b, and the compartment wall 95a integrally form a first case portion 9A. A second case portion 9B including the first side wall 92b is joined to the first case portion 9A from a position in the first axial direction L1.

The second peripheral wall 93a covers the input member 2 and the counter gear assembly 5 from outside in the radial direction R. The second side wall 93b covers ends of the input member 2 and the counter gear assembly 5 in the second axial direction L2. In the present embodiment, the second peripheral wall 93a is integral with a portion of the second side wall 93b located in the second axial direction L2 from the input member 2 and the counter gear assembly 5. In this example, the second peripheral wall 93a, the second side wall 93b, and the fourth side wall 94c integrally form a third case portion 9C. The third case portion 9C is joined to the first case portion 9A from a position in the second axial direction L2. Thus, the first case portion 9A (partition wall 91) covers an opening defined by the second peripheral wall 93a in the first axial direction L1.

The third peripheral wall 94a covers the pair of output members 3 and the differential gear assembly 4 from outside in the radial direction R. The third side wall 94b covers an end of the differential gear assembly 4 in the first axial direction L1. The fourth side wall 94c covers an end of the differential gear assembly 4 in the second axial direction L2. In the present embodiment, the third peripheral wall 94a and the third side wall 94b are integral with the first case portion 9A. The third peripheral wall 94a defines, in the second axial direction L2, an opening that is covered with the fourth side wall 94c. As described above, the fourth side wall 94c is integral with the second peripheral wall 93a and the second side wall 93b.

In the present embodiment, the first compartment A1 is defined by the partition wall 91, the first peripheral wall 92a, and the first side wall 92b. In other words, the partition wall 91, the first peripheral wall 92a, and the first side wall 92b in the case 9 surround the space defined as the first compartment A1.

In the present embodiment, the second compartment A2 is defined by the partition wall 91, the second peripheral wall 93a, and the second side wall 93b. In other words, the partition wall 91, the second peripheral wall 93a, and the second side wall 93b in the case 9 surround the space defined as the second compartment A2. In the present embodiment, the third compartment A3 is defined by the third peripheral wall 94a, the third side wall 94b, and the fourth side wall 94c. In other words, the third peripheral wall 94a, the third side wall 94b, and the fourth side wall 94c in the case 9 surround the space defined as the third compartment A3. In the present embodiment, the second compartment A2 and the third compartment A3 are continuous with each other.

In the present embodiment, the fourth compartment A4 is defined by the compartment wall 95a and the lid 95b. In other words, the compartment wall 95a and the lid 95b in the case 9 surround the space defined as the fourth compartment A4.

The compartment wall 95a is cylindrical and surrounds sides of the inverter 10. In the present embodiment, the compartment wall 95a extends, in an in-vehicle state, upward from the first peripheral wall 92a and the second peripheral wall 93a, defining an opening for the inverter 10 to be placed into or removed from the fourth compartment A4. The in-vehicle state herein refers to the vehicle drive device 100 being mounted on a vehicle. As described above, the compartment wall 95a is integral with the partition wall 91, the first peripheral wall 92a, the third peripheral wall 94a, and the third side wall 94b.

The lid 95b covers the opening defined by the compartment wall 95a. In the present embodiment, the lid 95b is attachable to and detachable from the compartment wall 95a.

The rotary electric machine 1 is to be a drive power source for wheels WH (refer to FIG. 2). The rotary electric machine 1 functions as a motor (electric motor) that receives electricity to generate power and as a generator (electric generator) that receives power to generate electricity. More specifically, the rotary electric machine 1 is electrically connected to an electric storage device (not shown) such as a battery or a capacitor. The rotary electric machine 1 runs on electricity stored in the electric storage device to generate a driving force. The rotary electric machine 1 also generates electricity from a driving force transmitted from the wheels WH and charges the electric storage device.

The stator 11 in the rotary electric machine 1 includes a cylindrical stator core 111. The stator core 111 is fixed to a nonrotatable member. In the present embodiment, the stator core 111 is fixed to the first peripheral wall 92a of the case 9 as the nonrotatable member. The rotor 12 in the rotary electric machine 1 includes a cylindrical rotor core 121. The rotor core 121 is supported in a manner rotatable relative to the stator core 111. In the present embodiment, the rotor 12 further includes a rotor shaft 122 connected to the rotor core 121 to rotate integrally with the rotor core 121. The rotor shaft 122 extends along the first axis X1. In the present embodiment, the rotor shaft 122 is cylindrical and has the first axis X1 as its axis.

In the present embodiment, the rotary electric machine 1 is an inner-rotor rotary electric machine. In other words, the stator 11 is located outward from the rotor 12 in the radial direction R. Thus, the stator core 111 is located outward from the rotor core 121 in the radial direction R. The rotor shaft 122 is located inward from the rotor core 121 in the radial direction R.

In the present embodiment, the rotary electric machine 1 is a rotary electric machine operable with a rotating field. Thus, the stator core 111 is wound with a stator coil. In the present embodiment, the stator coil is wound around the stator core 111 with a first coil end 112 protruding from the stator core 111 in the first axial direction L1 and a second coil end 113 protruding from the stator core 111 in the second axial direction L2. Although not shown, the rotor core 121 includes permanent magnets.

The input member 2 is drivably connected to the rotor 12 in the rotary electric machine 1. In the present embodiment, the input member 2 includes an input gear 21 and an input shaft 22.

Being drivably connected herein refers to two rotatable elements being connected to allow transmission of a driving force, including the two rotatable elements being connected to rotate integrally or the two rotatable elements being connected to allow transmission of a driving force with one or more transmission members in between. Examples of the transmission member include a shaft, a gear assembly, and a chain, which are members for transmitting rotation at a constant speed or at a variable speed. Examples of the transmission member may include a friction engagement device or an intermeshing engagement device, which are engagement devices for transmitting rotation and a driving force selectively.

The input gear 21 is connected to the input shaft 22 to rotate integrally with the input shaft 22. In the example shown in FIG. 1, the input gear 21 is integral with the input shaft 22.

The input shaft 22 extends along the first axis X1. In the present embodiment, the input shaft 22 extends in the axial direction L through the partition wall 91 in the case 9 and is connected to the rotor shaft 122 to rotate integrally with the rotor shaft 122. In the example shown in FIG. 1, the input shaft 22 has an end in the first axial direction L1 located inward in the radial direction R from an end of the rotor shaft 122 in the second axial direction L2. These ends are engaged with splines and are connected to each other to rotate integrally.

The counter gear assembly 5 includes a counter input gear 51 that meshes with the input gear 21, a counter output gear 52 rotatable integrally with the counter input gear 51, and a counter shaft 53 connecting the gears 51 and 52.

The counter input gear 51 and the counter output gear 52 are connected with the counter shaft 53 in between to rotate integrally. The counter shaft 53 extends along the third axis X3. In the example shown in FIG. 1, the counter input gear 51 is connected to the counter shaft 53 with splines. The counter output gear 52 is integral with the counter shaft 53. In the example shown in FIG. 1, the counter output gear 52 has a smaller diameter than the counter input gear 51. The counter output gear 52 is located in the first axial direction L1 from the counter input gear 51.

The differential gear assembly 4 distributes rotation transmitted from the input member 2 to the pair of output members 3. In the present embodiment, the differential gear assembly 4 includes a differential input gear 41 as an input element for the differential gear assembly 4. The differential gear assembly 4 thus distributes rotation of the differential input gear 41 to the pair of output members 3.

In the present embodiment, the differential gear assembly 4 further includes a differential case 42, a pair of pinion gears 43, and a pair of side gears 44. The pair of pinion gears 43 and the pair of side gears 44 are bevel gears.

The differential case 42 is a hollow member accommodating the pair of pinion gears 43 and the pair of side gears 44. The differential case 42 is connected to the differential input gear 41 to rotate integrally with the differential input gear 41. In the example shown in FIG. 1, the differential input gear 41 is connected to the differential case 42 by bolt fastening.

The pair of pinion gears 43 face each other at an interval in the radial direction R of the second axis X2. The pair of pinion gears 43 are attached to a pinion shaft 43a that is supported to rotate integrally with the differential case 42. The pair of pinion gears 43 can each rotate about the pinion shaft 43a and revolve around the second axis X2.

The pair of side gears 44 mesh with the pair of pinion gears 43. The pair of side gears 44 rotate about the second axis X2 as their rotation axis. The pair of side gears 44 face each other with the pinion shaft 43a in between at an interval in the axial direction L.

The pair of output members 3 are drivably connected to the respective wheels WH (refer to FIG. 2). In the present embodiment, the pair of output members 3 are connected to the respective side gears 44 to rotate integrally with the respective side gears 44. In the present embodiment, one of the pair of output members 3 extends through the third side wall 94b in the axial direction L, and the other of the output members 3 extends through the fourth side wall 94c in the axial direction L. The pair of output members 3 are each connected to a drive shaft DS that is drivably connected to the corresponding wheel WH to rotate integrally with the drive shaft DS. In the example shown in FIG. 1, each of the pair of output members 3 is cylindrical and has the second axis X2 as its axis. The pair of output members 3 each receive the corresponding drive shaft DS inward in the radial direction R. The output member 3 and the drive shaft DS are connected to each other with splines.

The inverter 10 controls the rotary electric machine 1. In the present embodiment, the inverter 10 is electrically connected to the rotary electric machine 1 and the electric storage device described above and converts power between direct current (DC) for the electric storage device and polyphase (three-phase in this example) alternating current (AC) for the rotary electric machine 1. In this example, the inverter 10 includes a switching device unit including multiple switching devices forming an inverter circuit, a smoothing capacitor for smoothing a voltage from a DC power supply in the inverter circuit, and a control board for controlling the inverter circuit.

A vertical direction for the vehicle drive device 100 in the in-vehicle state is hereafter referred to as a vertical direction V. Upward and downward in the vertical direction V are simply referred to as upward and downward. A direction perpendicular to the first axis X1 when viewed in the vertical direction V is referred to as a width direction W.

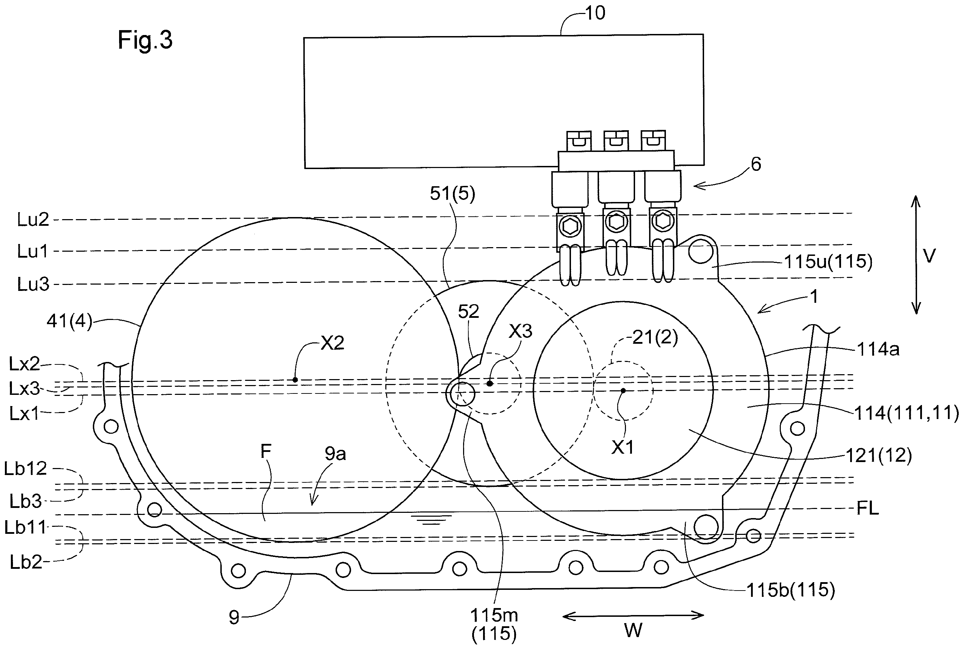

As shown in FIG. 3, the case 9 includes an oil reservoir 9a to store oil F. In the present embodiment, the oil reservoir 9a is a space surrounded by an inner surface of a lower portion of the case 9. The differential input gear 41 is at least partially located in the oil reservoir 9a.

The first axis X1 as the rotation axis of the rotor 12 is located below the second axis X2 as the rotation axis of the differential gear assembly 4. In the example shown in FIG. 3, the third axis X3 as the rotation axis of the counter gear assembly 5 is located above the first axis X1 and below the second axis X2. In other words, a second axial line Lx2 as an imaginary line extending through the second axis X2 in the width direction W, a third axial line Lx3 as an imaginary line extending through the third axis X3 in the width direction W, and a first axial line Lx1 as an imaginary line extending through the first axis X1 in the width direction W are arranged in this order from the top.

The inverter 10 is located above the rotary electric machine 1. In the example shown in FIG. 3, the inverter 10 is located above the rotary electric machine 1, the input member 2, the differential gear assembly 4, and the counter gear assembly 5.

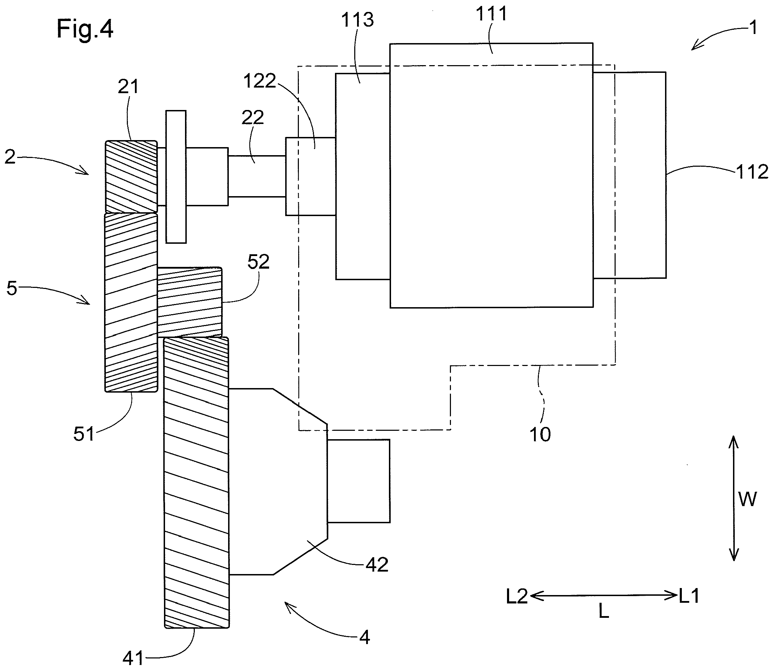

As shown in FIG. 4, the inverter 10 overlaps the rotary electric machine 1 when viewed in the vertical direction V. Two elements overlapping when viewed in a specific direction herein refers to two elements each having at least a portion to intersect with an imaginary line parallel to the specific viewing direction being moved to a direction perpendicular to the imaginary line.

As described above, the vehicle drive device 100 includes the rotary electric machine 1 to be a drive power source for the wheels WH and including the stator 11 and the rotor 12, the input member 2 drivably connected to the rotor 12, the pair of output members 3 connected to the respective wheels WH, the differential gear assembly 4 that distributes rotation transmitted from the input member 2 to the pair of output members 3, the inverter 10 that controls the rotary electric machine 1, and the case 9 accommodating the rotary electric machine 1, the input member 2, the differential gear assembly 4, and the inverter 10. The case 9 includes the oil reservoir 9a that stores the oil F. The inverter 10 is above the rotary electric machine 1 and overlaps the rotary electric machine 1 when viewed in the vertical direction V. The differential gear assembly 4 includes the differential input gear 41 being the input element in the differential gear assembly 4. The differential input gear 41 is at least partially located in the oil reservoir 9a and is located on the second axis X2 different from the first axis X1 as the rotation axis of the rotor 12. The first axis X1 is below the second axis X2. The rotor 12 has its lower end located above the lower end of the differential input gear 41.

In this structure, the first axis X1 as the rotation axis of the rotor 12 is located below the second axis X2 as the rotation axis of the differential gear assembly 4. Thus, the vehicle drive device 100 including the inverter 10 located above the rotary electric machine 1 and overlapping the rotary electric machine 1 when viewed in the vertical direction V may be easily smaller in the vertical direction V This arrangement also allows the area of the inverter 10 to be located within an area relatively near the first axis X1 in the width direction W that is a direction perpendicular to the first axis X1 when viewed vertically. Thus, the structure including the rotary electric machine 1, the differential gear assembly 4, and the inverter 10 may be smaller in the width direction W as well as in the vertical direction V.

In this structure, the differential input gear 41 is at least partially located in the oil reservoir 9a to store oil F. The rotor 12 has its lower end located above the lower end of the differential input gear 41. This reduces fluid resistance between the rotor 12 and the oil F and allows the differential input gear 41 to splash the oil F and supply the oil F to the supply targets including the rotary electric machine 1.

In the present embodiment, as shown in FIG. 4, the differential input gear 41 has no overlap with the inverter 10 when viewed in the vertical direction V. In the example shown in FIG. 4, the input gear 21, the counter input gear 51, and the counter output gear 52 have no overlap with the inverter 10 when viewed in the vertical direction V either.

This structure allows the inverter 10 and the differential gear assembly 4 to be nearer each other in the vertical direction V and is thus more likely to downsize the vehicle drive device 100 in the vertical direction V than a structure in which the differential input gear 41 overlaps the inverter 10 when viewed vertically.

In the present embodiment, in a steady circulation state in which the oil F in the case 9 circulates steadily as shown in FIG. 3, an oil level FL is above a differential lower end line Lb2 that is an imaginary line extending through the lower end of the differential input gear 41 in the width direction W. In other words, in the steady circulation state, the oil stored in the case 9 has an oil level (oil level FL) being the upper surface of the oil located above the lower end of the differential input gear 41. Thus, in the present embodiment, the differential input gear 41 splashes the oil F stored in the case 9 as the differential input gear 41 rotates.

In the present embodiment, the oil level FL is also below a rotor lower end line Lb12 that is an imaginary line extending through the lower end of the rotor 12 in the width direction W in the steady circulation state. In other words, the oil level (oil level FL) being the upper surface of the oil stored in the case 9 is below the lower end of the rotor 12 in the steady circulation state.

The steady circulation state herein refers to a state in which the oil F in the case 9 circulates steadily. More specifically, in the steady circulation state, the differential input gear 41 rotates and splashes the oil F stored in the case 9 with the oil level FL being stable. When the structure includes an oil pump that pumps the oil F stored in the case 9 to supply the oil F to the rotary electric machine 1 or another device, the steady circulation state includes a state in which the oil pump is operating. The steady circulation state is achieved basically when the vehicle is traveling (the rotary electric machine 1 is rotating). The steady circulation state may be achieved when the vehicle (rotary electric machine 1 or wheel WH) is stopped.

Thus, in the present embodiment, the oil level FL in the steady circulation state in which the oil F circulates steadily in the case 9 is above the lower end of the differential input gear 41 and is below the lower end of the rotor 12.

This structure reduces fluid resistance between the rotor 12 and the oil F when the vehicle incorporating the vehicle drive device 100 is traveling and also allows the differential input gear 41 to splash the oil F and supply the oil F to the supply targets including the rotary electric machine 1.

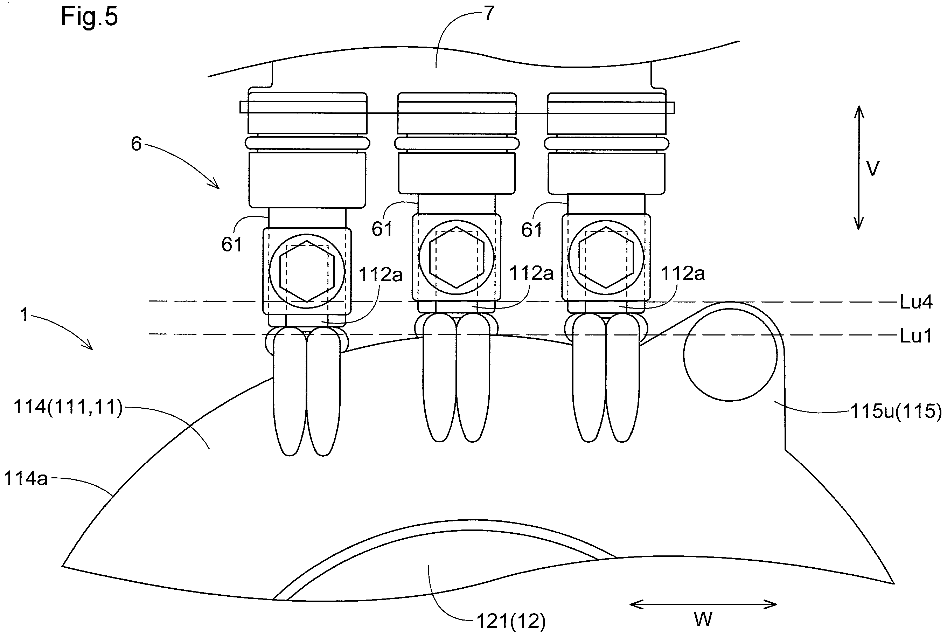

As shown in FIG. 3, the stator core 111 in the present embodiment includes a cylindrical body 114, three protrusions 115 protruding outward from an outer circumferential surface 114a of the body 114 in the radial direction R. FIG. 3 does not show the first coil end 112 for simplicity. The same applies to FIG. 5.

In the present embodiment, the stator 11 has a smaller outer diameter than the differential input gear 41. In the example shown in FIG. 3, the counter input gear 51 in the counter gear assembly 5 has a smaller outer diameter than the stator 11 and the differential input gear 41. The outer diameter of the stator 11 is the dimension of the outer circumferential surface 114a of the body 114 in the radial direction R. The stator 11 has an outer diameter equal to the distance between a stator upper end line Lu1 and a stator lower end line Lb11 in the vertical direction V. The stator upper end line Lu1 is an imaginary line extending through the upper end of the outer circumferential surface 114a of the body 114 in the width direction W. The stator lower end line Lb11 is an imaginary line extending through the lower end of the outer circumferential surface 114a of the body 114 in the width direction W. The differential input gear 41 has an outer diameter equal to the distance between a differential upper end line Lu2 and the differential lower end line Lb2 in the vertical direction V. The differential upper end line Lu2 is an imaginary line extending through the upper end of the differential input gear 41 in the width direction W. The differential lower end line Lb2 is an imaginary line extending through the lower end of the differential input gear 41 in the width direction W. The counter input gear 51 has an outer diameter equal to the distance between a counter upper end line Lu3 and a counter lower end line Lb3 in the vertical direction V. The counter upper end line Lu3 is an imaginary line extending through the upper end of the counter input gear 51 in the width direction W. The counter lower end line Lb3 is an imaginary line extending through the lower end of the counter input gear 51 in the width direction W.

In the example shown in FIG. 3, the differential upper end line Lu2, the stator upper end line Lu1, and the counter upper end line Lu3 are located in this order from the top. The differential lower end line Lb2, the stator lower end line Lb11, and the counter lower end line Lb3 are located in this order from the bottom.

Thus, in the present embodiment, the stator 11 is located outward from the rotor 12 in the radial direction R of the first axis X1 and has a smaller outer diameter than the differential input gear 41.

In this structure, a space for receiving the inverter 10 may be easily defined in an area located above the rotary electric machine 1 and overlapping the rotary electric machine 1 when viewed in the vertical direction V. Thus, the vehicle drive device 100 may be smaller in the vertical direction V

In the present embodiment, the second axis X2 as the rotation axis of the differential gear assembly 4 has no overlap with the area of the rotary electric machine 1 in the width direction W. In the example shown in FIG. 3, the second axis X2 has no overlap with the area of the counter gear assembly 5 in the width direction W either. The third axis X3 as the rotation axis of the counter gear assembly 5 overlaps the area of the rotary electric machine 1 in the width direction W. In the example shown in FIG. 3, the third axis X3 is between the first axis X1 and the second axis X2 in the width direction W.

Thus, in the present embodiment, the second axis X2 has no overlap with the area of the rotary electric machine 1 in the width direction W perpendicular to the first axis X1 when viewed in the vertical direction V

In a typical structure in which a differential gear assembly 4 includes, as its rotation axis, a second axis X2 that overlaps the area of a rotary electric machine 1 in the width direction W, the second axis X2 is likely to be located inward from a rotor 12 in the radial direction R. In such a structure, a first axis X1 as the rotation axis of the rotor 12 is less likely to be spaced below the second axis X2. In the structure according to the present embodiment, however, the second axis X2 is located outward from the rotary electric machine 1 in the width direction W, and the first axis X1 is thus easily spaced below the second axis X2.

In the present embodiment, the three protrusions 115 are at equal intervals in the circumferential direction of the body 114. In the example shown in FIG. 3, the three protrusions 115 are located at different heights in the vertical direction V. The highest of the three protrusions 115 is hereafter referred to as an upper protrusion 115u. The lowest protrusion of the three protrusions 115 is referred to as a lower protrusion 115b. The protrusion in the middle in the vertical direction V of the three protrusions 115 is referred to as a middle protrusion 115m.

The three protrusions 115 are fixed to a support S (refer to FIG. 1) that supports the rotary electric machine 1. As shown in FIG. 1, the support S is a stationary section 92c protruding inward in the radial direction R from the first peripheral wall 92a of the case 9 in the present embodiment. In this example, the three protrusions 115 are in contact with an end of the stationary section 92c in the first axial direction L1 and are connected to the stationary section 92c by bolt fastening.

As shown in FIG. 1, the vehicle drive device 100 in the present embodiment further includes a terminal block 6 that electrically connects the rotary electric machine 1 and the inverter 10.

The terminal block 6 includes a conductor 61 electrically connected to the first coil end 112 in the rotary electric machine 1. In the present embodiment, the conductor 61 extends across the first compartment A1 and the fourth compartment A4 through the first peripheral wall 92a in the case 9. The conductor 61 includes a portion located in the first compartment A1. The portion is electrically connected to the first coil end 112 with a coil connector 112a. The conductor 61 also includes a portion located in the fourth compartment A4. The portion is electrically connected to the inverter 10 with an inverter connector 10a.

In the present embodiment, the conductor 61 is fixed to the first peripheral wall 92a of the case 9 with an insulating member 7. The insulating member 7 is an electrically insulating member. The insulating member 7 thus electrically insulates the conductor 61 from the case 9.

In the present embodiment, a full portion of the terminal block 6 is located in the first axial direction L1 from the stator core 111. In other words, the full portion of the area of the terminal block 6 in the axial direction L has no overlap with the area of the stator core 111 in the axial direction L. In the example shown in FIG. 1, the full portion of the conductor 61 is located in the first axial direction L1 from the stator core 111.

Thus, in the present embodiment, the vehicle drive device 100 further includes the terminal block 6 that electrically connects the rotary electric machine 1 and the inverter 10. The stator 11 includes the stator core 111 that is cylindrical. The full portion of the terminal block 6 is located in the first axial direction L1 from the stator core 111.

In the vehicle drive device 100 with this structure, the terminal block 6 can be located nearer the first axis X1 without interfering with the stator core 111. Thus, the vehicle drive device 100 may be smaller in the vertical direction V

In the present embodiment, the area of the terminal block 6 in the axial direction L fully overlaps the area of the first coil end 112 in the axial direction L. In the example shown in FIG. 1, the area of the conductor 61 in the axial direction L fully overlaps the area of the first coil end 112 in the axial direction L.

Thus, in the present embodiment, the full portion of the terminal block 6 is located in the first axial direction L1 from the stator core 111. The stator 11 further includes the first coil end 112 protruding in the first axial direction L1 from the stator core 111. The area of the terminal block 6 in the axial direction L fully overlaps the area of the first coil end 112 in the axial direction L.

This structure is more likely to downsize the vehicle drive device 100 in the axial direction L than a structure in which at least a part of the area of the terminal block 6 in the axial direction L has no overlap with the area of the first coil end 112 in the axial direction L, or in other words, a structure in which the terminal block 6 protrudes at least partially from the stator 11 in the axial direction L.

As shown in FIG. 5, this structure according to the present embodiment includes multiple conductors 61 in the width direction W. In this example, the rotary electric machine 1 is driven on three-phase AC (U-phase, V-phase, and W-phase). The structure thus includes three conductors 61.

In the present embodiment, the area of the terminal block 6 in the width direction W fully overlaps the area of the stator core 111 in the width direction W. The full portion of the area of the terminal block 6 in the width direction W herein refers to the full portion of an area in the width direction W including the three conductors 61 located in the width direction W.

Thus, in the present embodiment, the vehicle drive device 100 further includes the terminal block 6 electrically connecting the rotary electric machine 1 and the inverter 10. The stator 11 includes the stator core 111 that is cylindrical. The area of terminal block 6 in the width direction W fully overlaps the area of the stator core 111 in the width direction W, where width direction W is perpendicular to the first axis X1 when viewed in the vertical direction V.

This structure is more likely to downsize the vehicle drive device 100 in the width direction W than a structure in which at least a part of the area of the terminal block 6 in the width direction W has no overlap with the area of the stator core 111 in the width direction W.

In the present embodiment, the upper protrusion 115u protrudes above the stator upper end line Lu1. In other words, the upper protrusion 115u protrudes above the upper end of the outer circumferential surface 114a of the body 114 in the stator core 111. In the present embodiment, the lower protrusion 115b protrudes below the stator lower end line Lb11. In other words, the lower protrusion 115b protrudes below the lower end of the outer circumferential surface 114a of the body 114 in the stator core 111. In the present embodiment, the middle protrusion 115m overlaps the first axial line Lx1 when viewed in the axial direction L.

In the present embodiment, the terminal block 6 has its lower end located above the stator upper end line Lu1. In other words, the terminal block 6 has its lower end located above the upper end of the outer circumferential surface 114a of the body 114 in the stator core 111. The terminal block 6 has its lower end located below a fourth upper end line Lu4 that is an imaginary line extending through the upper end of the upper protrusion 115u in the width direction W. In other words, the terminal block 6 has its lower end located below the upper end of the upper protrusion 115u. The lower end of the terminal block 6 herein refers to the lower end of the lowest conductor 61 of the three conductors 61 arranged in the width direction W.

Thus, in the present embodiment, the stator core 111 includes the body 114 that is cylindrical and the three protrusions 115 protruding outward from the outer circumferential surface 114a of the body 114 in the radial direction R of the first axis X1. The three protrusions 115 are at equal intervals in the circumferential direction of the body 114 and are fixed to the support S supporting the rotary electric machine 1. The upper protrusion 115 being the highest of the three protrusions 115 protrudes above the upper end of the outer circumferential surface 114a of the body 114. The terminal block 6 has its lower end located above the upper end of the outer circumferential surface 114a of the body 114 and below the upper end of the upper protrusion 115u.

In this structure, the terminal block 6 can be located nearer the first axis X1 without interfering with the upper protrusion 115u that protrudes above the upper end of the outer circumferential surface 114a of the body 114. Additionally, neither of the middle protrusion 115m and the lower protrusion 115b being the two protrusions other than the upper protrusion 115u of the three protrusions 115 at equal intervals in the circumferential direction is likely to be at the bottom of the stator core 111. Thus, the vehicle drive device 100 may be smaller in the vertical direction V.

### Other Embodiments

(1) In the above embodiment, the third axial line Lx3 is above the first axial line Lx1 and is below the second axial line Lx2. In some embodiments, the third axial line Lx3 may be, for example, below the first axial line Lx1. In some embodiments, the third axial line Lx3 may be above the second axial line Lx2.
(2) In the above embodiment, the stator lower end line Lb11 is above the differential lower end line Lb2. In some embodiments, the stator lower end line Lb11 may be located at the same height as or below the differential lower end line Lb2 in the vertical direction V.
(3) In the above embodiment, the oil level FL is above the lower end of the differential input gear 41 and below the lower end of the rotor 12 in the steady circulation state in which the oil F in the case 9 circulates steadily. In some embodiments, the oil level FL may be, for example, at the same height as or above the lower end of the rotor 12 in the vertical direction V in the steady circulation state. The oil level FL may be below the lower end of the differential input gear 41 in a state in which the oil F in the case 9 circulates in a particular manner.
(4) In the above embodiment, the stator 11 has a smaller outer diameter than the differential input gear 41. In some embodiments, the stator 11 may have the same outer diameter as or a larger outer diameter than the differential input gear 41.
(5) In the above embodiment, the upper protrusion 115u protrudes above the stator upper end line Lu1. In some embodiments, the full portion of the upper protrusion 115u may be located below the stator upper end line Lu1. In the above embodiment, the lower protrusion 115b protrudes below the stator lower end line Lb11. In some embodiments, the full portion of the lower protrusion 115b may be located above the stator lower end line Lb11. In the above embodiment, the middle protrusion 115m overlaps the first axial line Lx1 when viewed axially. In some embodiments, the full portion of the middle protrusion 115m may be located above or below the first axial line Lx1.
(6) In the above embodiment, the three protrusions 115 at equal intervals in the circumferential direction of the body 114 in the stator core 111 are located at different heights in the vertical direction V. In some embodiments, two of the three protrusions 115 may be located at the same height in the vertical direction V The three protrusions 115 may be arranged at intervals different from one another in the circumferential direction of the body 114. Two or fewer or four or more protrusions 115 may be included.
(7) In the above embodiment, the area of the terminal block 6 in the width direction W fully overlaps the area of the stator core 111 in the width direction W. In some embodiments, at least a part of the area of the terminal block 6 in the width direction W may not overlap the area of the stator core 111 in the width direction W.
(8) In the above embodiment, the terminal block 6 has its lower end located above the upper end of the outer circumferential surface 114a of the body 114 and below the upper end of the upper protrusion 115u. In some embodiments, the terminal block 6 may have its lower end located, for example, below the upper end of the outer circumferential surface 114a of the body 114. In some embodiments, the terminal block 6 may have its lower end located above the upper end of the upper protrusion 115u.
(9) In the above embodiment, the full portion of the terminal block 6 is located in the first axial direction L1 from the stator core 111. In some embodiments, the full portion of the terminal block 6 may be located in, for example, the second axial direction L2 from the stator core 111. In some embodiments, the area of the terminal block 6 in the axial direction L may overlap the area of the stator core 111 in the axial direction L.
(10) In the above embodiment, the area of the terminal block 6 in the axial direction L fully overlaps the area of the first coil end 112 in the axial direction L. In some embodiments, a part of the area of the terminal block 6 in the axial direction L may not overlap the area of the first coil end 112 in the axial direction L. In some embodiments, the area of the terminal block 6 in the axial direction L may overlap the area of the second coil end 113 in the axial direction L.
(11) In the above embodiment, the differential input gear 41 has no overlap with the inverter 10 when viewed vertically. In some embodiments, the differential input gear 41 may overlap the inverter 10 when viewed vertically.
(12) In the above embodiment, the second axis X2 has no overlap with the area of the rotary electric machine 1 in the width direction W. In some embodiments, the second axis X2 may overlap the area of the rotary electric machine 1 in the width direction W.
(13) The structure described in the above embodiment may be combined with any other structures described in the other embodiments unless any contradiction arises. The embodiments described herein are merely illustrative in all respects and may be modified variously as appropriate without departing from the spirit and scope of the present disclosure. Overview of Embodiments

The vehicle drive device (100) described above will be overviewed below.

A vehicle drive device (100) includes a rotary electric machine (1) to be a drive power source for wheels (WH) and including a stator (11) and a rotor (12), an input member (2) drivably connected to the rotor (12), a pair of output members (3) drivably connected to the respective wheels (WH), a differential gear assembly (4) that distributes rotation transmitted from the input member (2) to the pair of output members (3), an inverter (10) that controls the rotary electric machine (1), and a case (9) accommodating the rotary electric machine (1), the input member (2), the differential gear assembly (4), and the inverter (10). The case (9) includes an oil reservoir (9a) that stores oil (F). The inverter (10) is above the rotary electric machine (1) and overlaps the rotary electric machine (1) when viewed in a vertical direction (V). The differential gear assembly (4) includes a differential input gear (41) being an input element in the differential gear assembly (4). The differential input gear (41) is at least partially located in the oil reservoir (9a) and is located on a second axis (X2) different from a first axis (X1) being a rotation axis of the rotor (12). The first axis (X1) is below the second axis (X2). The rotor (12) has a lower end located above a lower end of the differential input gear (41).

In this structure, the first axis (X1) as the rotation axis of the rotor (12) is located below the second axis (X2) as the rotation axis of the differential gear assembly (4). Thus, the vehicle drive device (100) including the inverter (10) located above the rotary electric machine (1) and overlapping the rotary electric machine (1) when viewed in the vertical direction (V) may be easily smaller in the vertical direction (V). This arrangement also allows the area of the inverter (10) to be located within an area relatively near the first axis (X1) in the width direction (W) that is a direction perpendicular to the first axis (X1) when viewed vertically. Thus, the structure including the rotary electric machine (1), the differential gear assembly (4), and the inverter (10) may be smaller in the width direction (W) as well as in the vertical direction (V).

In this structure, the differential input gear (41) is at least partially located in the oil reservoir (9a) to store oil (F). The rotor (12) has its lower end located above the lower end of the differential input gear (41). This reduces fluid resistance between the rotor (12) and the oil (F) and allows the differential input gear (41) to splash the oil (F) and supply the oil (F) to the supply targets including the rotary electric machine (1).

In a steady circulation state in which the oil (F) in the case (9) circulates steadily, the oil (F) in the oil reservoir (9a) may have an oil level (FL) being an upper surface of the oil (F) located above the lower end of the differential input gear (41) and below the lower end of the rotor (12).

This structure reduces fluid resistance between the rotor (12) and the oil (F) when the vehicle including the vehicle drive device (100) is traveling, and also allows the differential input gear (41) to splash the oil (F) and supply the oil (F) to the supply targets including the rotary electric machine (1).

The stator (11) may be located outward from the rotor (12) in a radial direction (R) of the first axis (X1). The stator (11) may have a smaller outer diameter than the differential input gear (41).

In this structure, a space for receiving the inverter (10) may be easily defined in an area located above the rotary electric machine (1) and overlapping the rotary electric machine (1) when viewed in the vertical direction (V). Thus, the vehicle drive device (100) may be smaller in the vertical direction (V).

The vehicle drive device (100) may further include a terminal block (6) electrically connecting the rotary electric machine (1) and the inverter (10). The stator (11) may include a stator core (111) being cylindrical. An area of the terminal block (6) in a width direction (W) may fully overlap an area of the stator core (111) in the width direction (W), where the width direction (W) is perpendicular to the first axis (X1) when viewed vertically.

This structure is more likely to downsize the vehicle drive device (100) in the width direction (W) than a structure in which at least a part of the area of the terminal block (6) in the width direction (W) has no overlap with the area of the stator core (111) in the width direction (W).

With the area of the terminal block (6) in the width direction (W) fully overlapping the area of the stator core (111) in the width direction (W), the stator core (111) may include a body (114) being cylindrical and three protrusions (115) protruding outward from an outer circumferential surface (114a) of the body (114) in a radial direction (R) of the first axis (X1). The three protrusions (115) may be at equal intervals in a circumferential direction of the body (114) and may be fixed to a support (S) supporting the rotary electric machine (1). An upper protrusion (115u) being highest of the three protrusions (115) may protrude above an upper end of the outer circumferential surface (114a) of the body (114). The terminal block (6) may have a lower end located above the upper end of the outer circumferential surface (114a) of the body (114) and below an upper end of the upper protrusion (115u).

In this structure, the terminal block (6) can be located nearer the first axis X1 without interfering with the upper protrusion (115u) that protrudes above the upper end of the outer circumferential surface (114a) of the body (114). Additionally, neither of the middle protrusion (115m) and the lower protrusion (115b) being the two protrusions other than the upper protrusion (115u) of the three protrusions (115) at equal intervals in the circumferential direction is likely to be at the bottom of the stator core (111). Thus, the vehicle drive device (100) may be smaller in the vertical direction (V).

The vehicle drive device (100) may further include a terminal block (6) electrically connecting the rotary electric machine (1) and the inverter (10). The stator (11) may include a stator core (111) being cylindrical. A full portion of the terminal block (6) may be located in one direction (L1) from the stator core (111) in an axial direction (L).

In the vehicle drive device (100) with this structure, the terminal block (6) can be located nearer the first axis (X1) without interfering with the stator core (111). Thus, the vehicle drive device (100) may be smaller in the vertical direction (V).

With the full portion of the terminal block (6) being located in one direction (L1) from the stator core (111) in the axial direction (L), the stator (11) may further include a coil end (112) protruding in one direction (L1) from the stator core (111) in the axial direction (L). An area of the terminal block (6) in the axial direction (L) may fully overlap an area of the coil end (112) in the axial direction (L).

This structure is more likely to downsize the vehicle drive device (100) in the axial direction (L) than a structure in which at least a part of the area of the terminal block (6) in the axial direction (L) has no overlap with the area of the first coil end (112) in the axial direction (L), or in other words, a structure in which the terminal block (6) protrudes at least partially from the stator (11) in the axial direction (L).

The differential input gear (41) may have no overlap with the inverter (10) when viewed vertically.

This structure allows the inverter (10) and the differential gear assembly (4) to be nearer each other in the vertical direction (V) and is thus more likely to downsize the vehicle drive device (100) in the vertical direction (V) than a structure in which the differential input gear (41) overlaps the inverter (10) when viewed vertically.

The second axis (X2) may have no overlap with an area of the rotary electric machine (1) in a width direction (W) perpendicular to the first axis (X1) when viewed vertically.

In a typical structure in which a differential gear assembly (4) includes, as its rotation axis, a second axis (X2) that overlaps the area of a rotary electric machine (1) in the width direction (W), the second axis (X2) is likely to be located inward from a rotor (12) in the radial direction (R). In such a structure, the first axis (X1) as the rotation axis of the rotor (12) is less likely to be spaced below the second axis (X2). In the structure according to the present embodiment, however, the second axis (X2) is located outward from the rotary electric machine (1) in the width direction (W), and the first axis (X1) is easily spaced downward from the second axis (X2).

### INDUSTRIAL APPLICABILITY

The technique according to the embodiments of the present disclosure is applicable to a vehicle drive device including a rotary electric machine to be a drive power source for wheels, an input member drivably connected to a rotor in the rotary electric machine, a pair of output members drivably connected to the respective wheels, a differential gear assembly that distributes rotation transmitted from the input member to the pair of output members, and an inverter that controls the rotary electric machine.

### REFERENCE SIGNS LIST

- 100: vehicle drive device
- 1: rotary electric machine
- 11: stator
- 12: rotor
- 2: input member
- 3: output member
- 4: differential gear assembly
- 10: inverter
- WH: wheel
- X1: first axis
- X2: second axis
- V: vertical direction

## Claims

1. A vehicle drive device, comprising:
a rotary electric machine to be a drive power source for wheels, the rotary electric machine including a stator and a rotor;
an input member drivably connected to the rotor,
a pair of output members drivably connected to the respective wheels;
a differential gear assembly configured to distribute rotation transmitted from the input member to the pair of output members;
an inverter configured to control the rotary electric machine; and
a case accommodating the rotary electric machine, the input member, the differential gear assembly, and the inverter,
wherein the case includes an oil reservoir configured to store oil,
the inverter is above the rotary electric machine and overlaps the rotary electric machine when viewed in a vertical direction,
the differential gear assembly includes a differential input gear being an input element in the differential gear assembly,
the differential input gear is at least partially located in the oil reservoir and is located on a second axis different from a first axis being a rotation axis of the rotor,
the first axis is below the second axis, and
the rotor has a lower end located above a lower end of the differential input gear.

2. The vehicle drive device according to claim 1, wherein
in a steady circulation state in which the oil in the case circulates steadily, the oil in the oil reservoir has an oil level being an upper surface of the oil located above the lower end of the differential input gear and below the lower end of the rotor.

3. The vehicle drive device according to claim 1 or claim 2, wherein
the stator is located outward from the rotor in a radial direction of the first axis, and
the stator has a smaller outer diameter than the differential input gear.

4. The vehicle drive device according to any one of claims 1 to 3, further comprising:
a terminal block electrically connecting the rotary electric machine and the inverter,
wherein the stator includes a stator core being cylindrical, and
an area of the terminal block in a width direction fully overlaps an area of the stator core in the width direction, where the width direction is perpendicular to the first axis when viewed in the vertical direction.

5. The vehicle drive device according to claim 4, wherein
the stator core includes a body being cylindrical and three protrusions protruding outward from an outer circumferential surface of the body in a radial direction of the first axis,
the three protrusions are at equal intervals in a circumferential direction of the body and are fixed to a support supporting the rotary electric machine,
an upper protrusion being highest of the three protrusions protrudes above an upper end of the outer circumferential surface of the body, and
the terminal block has a lower end located above the upper end of the outer circumferential surface of the body and below an upper end of the upper protrusion.

6. The vehicle drive device according to any one of claims 1 to 5, further comprising:
a terminal block electrically connecting the rotary electric machine and the inverter,
wherein the stator includes a stator core being cylindrical, and
a full portion of the terminal block is located in one direction from the stator core in an axial direction.

7. The vehicle drive device according to claim 6, wherein
the stator further includes a coil end protruding in one direction from the stator core in the axial direction, and
an area of the terminal block in the axial direction fully overlaps an area of the coil end in the axial direction.

8. The vehicle drive device according to any one of claims 1 to 7, wherein
the differential input gear has no overlap with the inverter when viewed in the vertical direction.

9. The vehicle drive device according to any one of claims 1 to 8, wherein
the second axis has no overlap with an area of the rotary electric machine in a width direction perpendicular to the first axis when viewed in the vertical direction.
